# DEMANDE DE BREVET EUROPEEN

(11) **EP 0 693 349 A1**
(43) Date de publication de la demande: **24.01.1996**
(21) Numéro de dépôt: 95401728.1
(22) Date de dépôt: 20.07.1995
(51) Int. Cl.: B26F 3/00

(54) **Procédé de découpe de fromage au jet de liquide sous pression et applications**

(30) Priorité: 21.07.1994 FR 9409034
(71) Demandeur: INITIATIVES ET DEVELOPPEMENT ALIMENTAIRES - IDEVAL S.A., F-57076 Metz (FR)
(72) Inventeur: Dale, Gérard, F-63100 Clermont Ferrand (FR); Parmentier, Michel, F-54740 Vaudeville (FR); Boos, Sylvain, F-57000 Metz (FR)
(74) Mandataire: Schrimpf, Robert

(57) **Abrégé**

L'invention concerne un procédé de découpe d'un fromage au moyen d'un jet de liquide sous très haute pression, caractérisé en ce qu'on utilise comme liquide une solution saline ayant une force ionique suffisante.

## Description

L'invention concerne la découpe des fromages au jet de liquide, notamment les fromages à pâte pressée et pâtes molles.

La technique de découpe au jet d'eau à très haute pression est pratiquée dans diverses industries et l'on a pensé depuis quelques années à l'utiliser pour découper des fromages, en vue d'obtenir certains avantages évidents, et notamment de diminer les risques de contamination par l'outil de découpe (certificat d'utilité français n° 2 612 115).

Dans la pratique, la découpe d'un fromage au moyen d'un jet de liquide à très haute pression présente des difficultés, tout particulièrement du fait de la formation à l'endroit de la coupe d'une mousse crémeuse faisant office de colle et rendant très difficile la séparation des tranches coupées, problème d'autant plus aigu que l'on cherche à obtenir des tranches fines.

Des essais effectués en faisant varier la pression du jet et le diamètre de la buse de projection n'ont pas apporté de solution à ce problème et ont par contre donné lieu à l'apparition d'autres défauts comme la formation de stries plus ou moins profondes. plus ou moins fines, plus ou moins denses.

L'ajout d'un épaississant alimentaire pour rendre le jet plus cohérent, dans le but de diminer les interactions eau-matières grasses, ont permis de diminuer les stries mais sans empêcher les émulsions.

On a maintenant déterminé qu'il est possible d'éviter la formation d'une émulsion à l'endroit de la coupe si l'on utilise comme liquide de découpe une solution aqueuse saline acceptable du point de vue de l'hygiène alimentaire et ayant une force ionique suffisante.

La "force ionique", comme on le sait, est la somme des charges des ions présents dans la solution.

La charge des ions de la solution polarise l'activité de solvatation de l'eau qui devient d'autant moins disponible pour dissoudre la matière grasse ou les protéines du fromage.

Le pouvoir d'émulsion est d'autant moins important que la force ionique est élevée. Dans la pratique, pour un sel donné, on constate qu'il y a un seuil inférieur de concentration molaire en dessous duquel on n'empêche pas la formation d'une émulsion à l'endroit de la coupe.

Ce seuil est par exemple inférieur à 10⁻³ mole par litre dans le cas du carbonate de sodium et d'environ 10⁻ mole par litre dans le cas du chlorure de sodium.

On utilisera donc par exemple une solution de chlorure de sodium à environ 5.10⁻ mole / litre au moins ou une solution de carbonate de sodium à environ 1.10⁻³ mole/litre au moins ou un autre sel à force ionique équivalente.

Avantageusement, pour obtenir la force ionique adéquate, on peut aussi tamponner la solution, par exemple au moyen d'acide citrique, pour réduire la concentration en sel nécessaire.

De préférence, on incorpore également à la solution un agent épaississant pour améliorer sa cohérence, ce qui améliore nettement la découpe.

L'invention s'applique notamment à tout fromage mince, typiquement d'épaisseur inférieure à 6 cm, ne présentant pas de grosses ouvertures.

Pour découper un fromage à pâte pressée cuite d'une épaisseur de 1 cm à 3 cm, on a respecté de préférence les conditions suivantes :
- pression du jet : 2 000 à 3 500 bars
- diamètre de la buse : 0,12 à 0,25 mm
- distance buse-fromage: 1 à 5 mm
- température du fromage > 0°C - 10°C
- agent épaississant : 1 à 5 g/l
- solution saline : solution aqueuse de carbonate de sodium à une concentration de la gamme 10⁻¹ à 10⁻³ mol/l, tamponnée à pH 7,5 par addition d'acide citrique.

De préférence on limite l'épaisseur du fromage à 3 cm.

L'agent épaississant est par exemple un galactomannane.

Dans le cas des fromages à pâte molle et pour une épaisseur de fromage supérieure à 1 cm, il est préférable de découper le fromage avant affinage, par exemple 24 heures après le jour de fabrication, afin de faire refleurir la coupe et obtenir des formes parfaitement fleuries à l'emballage.

Pour certains types de fromage à humidité plus élevée, il est préférable de disposer un papier ou un film sous la face inférieure du fromage.

Un système d'aspiration des buées sous la table de découpe est également avantageux.

L'invention n'est pas limitée à la découpe d'un fromage à pâte pressée. Elle s'applique également à d'autres pâtes fromagères, par exemple les fromages à pâte molle (exemple Le Brie).

## Revendications

**1.** Procédé de découpe d'un fromage au moyen d'un jet de liquide sous très haute pression, caractérisé en ce qu'on utilise comme liquide une solution aqueuse saline acceptable du point de vue alimentaire et ayant une force ionique suffisante pour éviter la formation d'une émulsion à l'endroit de la coupe.

**2.** Procédé selon la revendication 1, dans lequel on utilise une solution contenant au moins environ 5.10⁻ mole/litre de chlorure de sodium.

**3.** Procédé selon la revendication 2 dans lequel on utilise une solution contenant au moins environ 10⁻³ mole/l de carbonate de sodium.

**4.** Procédé selon la revendication 3, dans lequel on utilise une solution aqueuse de carbonate de sodium à une concentration de 10⁻¹ à 10⁻³ mole/l tamponnée au voisinage de la neutralité.

**5.** Procédé selon l'une des revendications 1 à 4, dans lequel on ajoute à la solution un agent épaississant.

**6.** Procédé selon la revendication 5, dans lequel on utilise 1 à 5 g/l d'un galactomannane comme agent épaississant.

**7.** Procédé selon l'une des revendications 1 à 6, dans lequel on règle la température du fromage à une valeur comprise dans l'intervalle 0 - 10°C avant sa découpe.

**8.** Procédé selon l'une des revendications 1 à 7, dans lequel on utilise un jet sous pression de 2 000 à 3 500 bars, un diamètre de la buse de 0,12 à 0,25 mm et une distance buse-fromage de 1 à 5 mm.

**9.** Procédé selon l'une des revendications 1 à 8, dans lequel on découpe le fromage après avoir réglé son épaisseur à une valeur de la gamme 1 - 6 cm, de préférence 1 - 3 cm.

**10.** Application d'un procédé selon l'une des revendications 1 à 9 à la découpe d'un fromage à pâte pressée.

**11.** Application d'un procédé selon l'une des revendications 1 à 9 à la découpe d'un fromage à pâte molle.
